# EUROPÄISCHE PATENTANMELDUNG

(11) **EP 0 733 904 A2**
(43) Veröffentlichungstag der Anmeldung: **25.09.1996**
(21) Anmeldenummer: 96103832.0
(22) Anmeldetag: 12.03.1996
(51) Int. Cl.: G01N 35/08, G01N 1/00

(54) **Verfahren zur Online-Analyse**

(30) Priorität: 24.03.1995 DE 19510769
(71) Anmelder: BAYER AG, 51368 Leverkusen (DE)
(72) Erfinder: Moehnle, Klaus, Dr., 51465 Bergisch Gladbach (DE)

(57) **Zusammenfassung**

Zur Online-Analyse von Analyten, die in einem zu prüfenden flüssigen Medium vorliegen, werden in einem kontinuierlich wiederkehrenden und automatisierbaren Rhythmus einem Detektor schrittweise folgende flüssigen Stoffe zur Feststellung eines für den Analyten charakteristischen Signals zugeführt:
a) ein vom Analyten freies und kein Signal gebendes Lösungsmittel (I) zur Feststellung der Signal-Basislinie;
b) das den Analyten enthaltende Medium (II) mit oder ohne in konstantem Mischungsverhältnis zugesetztes Lösungsmittel (I) zur Feststellung des Analyt-Signals; und
c) ein homogenes Gemisch von (II) mit einer mit (II) beliebig homogen mischbaren Kalibrierlösung (III) in einem konstanten Mischungsverhältnis (II):(III) zur Feststellung des additiven Analyt-Signals.

Die Schritte b) und c) können auch in umgekehrter Reihenfolge ausgeführt werden. Die festgestellten Signale werden als Meßdaten ausgewertet. Zur Überprüfung einer ausreichenden chemischen und physikalischen Beständigkeit von (III) und der Richtigkeit der Analyse wird der genannte Rhythmus durch
d) die Feststellung des Signals einer Prüflösung (IV) zur Überprüfung der Richtigkeit des Systems
unterbrochen und dann wie vorher fortgesetzt.

## Beschreibung

Die vorliegende Erfindung betrifft ein Verfahren zur Online-Analyse von Analyten, die in einem zu prüfenden flüssigen Medium vorliegen, nach dem Additionsverfahren für die Kalibrierung. Hierzu werden das den Analyten enthaltende Medium und geeignete Vergleichsflüssigkeiten zur Feststellung eines für den Analyten charakteristischen Signals kontinuierlich in einem wiederkehrenden und automatisierbaren Rhythmus einem Detektor schrittweise zugeführt. Das erfindungsgemäße Verfahren erlaubt zusätzlich die interne Überprüfung der Richtigkeit des Analysensystems.

Die Analytik von chemischen Erzeugnissen und Zwischenprodukten sowie von Gemischen verschiedener Stoffe hat einen hohen Stellenwert in allen Bereichen der chemischen Verfahrenstechnik. Dies gilt zum einen für Erzeugnisse, die an den Verbraucher oder Weiterverarbeiter ausgeliefert werden, da im allgemeinen festgesetzte Spezifikationen in hohem Maße gefordert werden und eingehalten werden müssen. Dies gilt jedoch gleichermaßen für Zwischenprodukte, die innerhalb einer Anlage oder in einem Verbundsystem weiterverarbeitet werden sollen, wenn beispielsweise von der Einhaltung bestimmter Spezifikationen die Standzeit eines Katalysators oder die Höhe der Ausbeute in einer Folgestufe abhängen. Die Verfahrenstechnik bei der Herstellung chemischer Erzeugnisse hat in zunehmendem Maße eine Verbesserung erfahren, die die Reindarstellung chemischer Erzeugnisse in einem früher nicht gekannten Maße ermöglicht; daraus resultieren einmal die genannten Forderungen nach Einhaltung immer strengerer Spezifikationen als auch gleichzeitig die Notwendigkeit, mit immer geringeren Verunreinigungen und damit nach höheren Forderungen an die Analytik umgehen zu müssen. Eine weitere, immer dringender gewordene Forderung ist ferner die nach technischer Vereinfachung einer Anlage, beispielsweise nach Fortfall von Zwischenlagern lediglich zum Zwecke der Analytik und nach Ersatz aufwendiger Analysenverfahren, beides zur Einsparung von sowohl Investitions- als auch Arbeitskosten.

Bei den hohen an sie gestellten Forderungen sieht sich die Analytik in chemischen Prozessen grundsätzlichen Schwierigkeiten gegenübergestellt:
Hier sind zuerst der Ort und die Art der Probenahme zu nennen, um eine für die Analytik geeignete repräsentative Probe zu erhalten. Dies gilt beispielsweise für Zwischenlager, wo infolge der zwischenzeitlichen Beruhigung des Erzeugnisses eine Separierung von gewünschtem Stoff und ungewünschten Verunreinigungen eintreten kann. Eine solche Separierung kann beispielsweise nicht vollständig gelöste, kolloidal vorhandene Verunreinigungen betreffen oder Erscheinungen der Separierung, die durch Polaritätsunterschiede, beispielsweise durch das Vorhandensein von polaren Analyten, wie Metallsalzen, in unpolaren Kohlenwasserstoffen oder ihren Mischungen oder andere Unterschiede gegeben sind. Weitere Schwierigkeiten ergeben sich aus gegebenenfalls längeren Transportwegen der entnommenen Probe, aus der Aufarbeitung der Proben sowie etwa dem Gebrauch benötigter Hilfsmittel und Reagenzien bei der Durchführung der Analyse, wodurch grundsätzlich die Gefahr besteht, Spuren von Stoffen einzuschleusen, die die Erkennung des Analyten erschweren oder verfälschen.

Lediglich als Beispiel für eine solche analytische Aufgabe, das keineswegs erschöpfend sein soll, sei die fortlaufende genaue Bestimmung der Natrium- und Kalium-Gehalte in Krackmittelölen der petrochemischen Industrie erwähnt. Solche Krackmittelöle fallen als Sumpf von Fraktionierkolonnen verschiedener petrochemischer Erzeugnisse (Kohlenwasserstoffgemische) an und finden Verwendung für die Produktion von Ruß für die Kautschukindustrie. In solchen Krackmittelölen konzentrieren sich die nicht flüchtigen Na- und K-Verbindungen, wenngleich sie trotz dieser Konzentration immer noch im mg/kg-Bereich vorliegen. Jedoch sind auch solche geringen Gehalte im Ruß für Kautschukmaterialien schädlich, da es zum Auskristallisieren von Alkalisalzen kommt, was zu einer Versprödung und schnellen Materialermüdung solcher Kautschukmaterialien führt. Daher wird das anfallende Krackmittelöl zunächst in einen Produktionstank und weiter in einen Analysentank geleitet und kann erst nach Überprüfung der Na/K-Gehalte und nach der Freigabe in einen Versandtank übergeführt werden.

Zur sicheren Probenahme unter Vermeidung der oben geschilderten Separierungsgefahren müssen der Produktionstank und der Analysentank eine Rühr- oder Umpumpeinrichtung besitzen, um die Entnahme stets repräsentativer Proben zu gewährleisten. Die entnommenen Proben werden gemäß herkömmlicher Analytik zur Bestimmung der Na/K-Gehalte entweder mit Salzsäure extrahiert oder mit Oxidationsmitteln, wie H₂SO₄/HNO₃, mineralisiert. Die solchermaßen aufgearbeiteten Proben können erst dann beispielsweise einer Flammenphotometrie oder einer Atomabsorptionsspektrometrie als Detektionsgeräten zugeführt werden. Bedingt durch die große Allgegenwartskonzentration von Natrium und Kalium bedeuten jedoch solche zusätzlichen Analysenprozeduren, wie beispielsweise Extraktion oder mineralisierender Aufschluß das unvermeidliche Einbringen von zufälligen und systematischen Fehlern.

Es bestand somit der Wunsch, die diskontinuierliche Analytik von entnommenen Einzelproben auf ein Online-Verfahren umzustellen. Hierbei stand der Fachmann jedoch der Problematik gegenüber, daß beispielsweise Kohlenwasserstoffgemische und Metallsalze einen starken Polaritätsunterschied aufweisen, der eine direkte Messung und vor allem eine Kalibrierung nicht einfach zu ermöglichen schien, da eine Anpassung der Kalibrierlösung an die Zusammensetzung der Probelösung nicht möglich schien. Ferner war das Problem der Erkennung von physikalischen und chemischen Störungen völlig ungeklärt.

Es wurde nun mit Hilfe des erfindungsgemäßen Online-Analysenverfahrens nach dem Additionsverfahren für die Kalibrierung ein einfach zu handhabendes, robustes, im Falle einer Instandhaltung gut zu wartendes und wirtschaftlich zu betreibendes Verfahren gefunden, das nicht nur zu genauen und richtigen, d.h. mit unabhängigen gesicherten Analysenverfahren vergleichbaren Analysenwerten führt, sondern das es auch weiterhin ermöglicht, physikalische und chemische Störungen durch Kontrollüberprüfungen zu erkennen. Hierzu wird die Kalibrierlösung der Zusammensetzung der Probelösung angepaßt, indem beide beliebig miteinander homogen mischbar gestaltet werden. Zu erkennende Störungen sind hierbei beispielsweise Störungen des flüssigen Mediums, das den Analyten enthält (Kontaminationen), die Überprüfung etwa chemisch und physikalisch instabiler Kalibrierlösungen (Chemostabilitätsprüfung) und Störungen im Detektorgerät (Analysengerätesystemprüfung).

Die Erfindung betrifft ein Verfahren zur Online-Analyse von in einem zu prüfenden flüssigen Medium vorliegenden Analyten nach dem Additionsverfahren für die Kalibrierung, das dadurch gekennzeichnet ist, daß man in einem kontinuierlich wiederkehrenden und automatisierbaren Rhythmus einem Detektor schrittweise folgende flüssigen Stoffe zur Feststellung eines für den Analyten charakteristischen Signals zuführt:
a) ein vom Analyten freies und kein Signal gebendes Lösungsmittel (I) zur Feststellung der Signal-Basislinie;
b) das den Analyten enthaltende Medium (II) mit oder ohne in konstantem Mischungsverhältnis zugesetztes Lösungsmittel (I) zur Feststellung des Analyt-Signals; und
c) ein homogenes Gemisch von (II) mit einer mit (II) beliebig homogen mischbaren Kalibrierlösung (III) in einem konstanten Mischungsverhältnis (II):(III) zur Feststellung des additiven Analyt-Signals;
oder die Schritte b) und c) in umgekehrter Reihenfolge ausführt und die festgestellten Signale als Meßdaten auswertet` wobei zur Überprüfung einer ausreichenden chemischen und physikalischen Beständigkeit von (III) und der Richtigkeit der Analyse der genannte Rhythmus durch
d) Feststellung des Signals einer Prüflösung (IV) zur Überprüfung der Richtigkeit des Systems
unterbrochen und dann wie vorher fortgesetzt wird.

Ein wesentliches Merkmal des erfindungsgemäßen Verfahrens ist die Anwendung des Additionsverfahrens, durch welches ein Vergleich der Feststellung von Meßwerten des zu überprüfenden flüssigen Mediums mit denen eines Gemisches aus zu prüfendem Medium und einer Kalibrierlösung ermöglicht wird.

Die festgestellten für den Analyten charakteristischen Signale werden als Meßwerte auf ein Anzeigegerät übertragen oder durch ein schriftliches Aufzeichnungsverfahren sichtbar und kontinuierlich ablesbar gemacht. Unter Benutzung der ständig verbesserten Dokumentationstechnik ist es jedoch besonders vorteilhaft, die erhaltenen Signale einem Geräterechner (Computer) zuzuführen und sie kontinuierlich mit vorgegebenen Sollwerten zu vergleichen; bei Überschreitung zulässiger Abweichungen kann eine entsprechende Alarmgebung vorgesehen werden.

Detektoren zur Feststellung von für den Analyten charakteristischen Signalen sind dem auf diesem Gebiet tätigen Fachmann bekannt; es handelt sich beispielsweise und ohne erschöpfende Aufzählung um optische Anzeigen (Flammenphotometer, Atomabsorptionsspektrometer zur Erkennung einzelner Elemente, insbesondere zur Erkennung von Metallen; Feststellung der Extinktion oder der Drehung der Polarisationsebene, gegebenenfalls im Anschluß an charakteristische, schnell verlaufende chemische Reaktionen des Analyten) oder elektrische Methoden (Messung der Leitfähigkeit bzw. der elektrischen Kapazität in Abhängigkeit von der vorhandenen Menge des Analyten in dem zu prüfenden Medium).

Die Probenahme des zu prüfenden, den Analyten enthaltenden Mediums erfolgt in kontinuierlichem Rhythmus an beliebiger Stelle im Fabrikationsverfahren, wo immer die Entnahme einer repräsentativen Probe gewährleistet ist, bevorzugt jedoch an einer Transportleitung unmittelbar im Anschluß an die Herstellung des zu prüfenden flüssigen Mediums.

Zur Durchführung des erfindungsgemäßen Analysenverfahrens wird das in kontinuierlichem Rhythmus entnommene zu prüfende flüssige Medium (II) einer möglichst benachbart aufgestellten integrierten Analysenstation zugeführt, wo gleichzeitig ein vom Analyten freie und kein Signal gebende Lösungsmittel (I), die mit (II) beliebig homogen mischbare Kalibrierlösung (III) und für den Fall ihrer Notwendigkeit die Prüfsubstanz (IV) zur Verfügung stehen. Diese integrierte Analysenstation enthält ferner den erforderlichen Detektor sowie Einrichtungen für die Aufnahme, Verarbeitung und Dokumentation der Signale. Durch eine geeignete Übertragungseinrichtung kann die regelmäßige Überprüfung dieser Signale (Meßwerte) und ein gegebenenfalls bei Überschreitung zulässiger Toleranzen auszulösender Alarm über eine Fernanzeige dem Bedienungs- und Überwachungspersonal der chemischen Fabrikationsanlage zugänglich gemacht werden. Die genannten Flüssigkeiten (I), (II) und (III), sowie bei Bedarf (IV) werden dem Detektor in kontinuierlichem Rhythmus zugeführt, wozu in üblicher Weise einstellbare Dosierpumpen benutzt werden. In bevorzugter Weise werden auf dem Markt erhältliche mehrkanalige Dosierpumpen mit einstellbarem Mischungsverhältnis, beispielsweise für (II)/(I)-Gemische, (II)/(III)-Gemische oder (II)/(I)/(III)-Gemische, und nachgeschalteter Mischstrecke eingesetzt (z.B. HPLC-Pumpen mit schnell schaltendem Ventil für die Gradientenbildung).

Im folgenden wird das erfindungsgemäße Verfahren beispielhaft anhand der Feststellung und Überwachung von Na-/K-Gehalten in einem Kohlenwasserstoffgemisch (Krackmittelöl) beschrieben, wofür sich das erfindungsgemäße Verfahren hervorragend und in bevorzugter Weise eignet. So wird zunächst mit Hilfe einer vierkanaligen Dosierpumpe mit einstellbarem Mischungsverhältnis und nachgeschalteter Mischstrecke und bevorzugt mit schnell schaltendem Ventil ein vom Analyten freies und kein Signal gebendes Lösungsmittel (I) einem Flammenphotometer zur Feststellung der Signal-Basislinie zugeführt. Die charakteristischen Signale sind im vorliegenden Beispiel die Spektrallinien von Na und K. Das erhaltene Basissignal ist innerhalb kurzer Zeit konstant; es wird sodann wie alle übrigen Signale nach Erreichung von deren Konstanz von einem Analysenrechner (Computer) aufgenommen und weiter verarbeitet. Danach wird über einen anderen Kanal der mehrkanaligen Pumpe mit schnell schaltendem Ventil eine Probe des zu prüfenden flüssigen Mediums (II) mit darin vorliegendem Analyten in gleicher Weise dem Flammenphotometer zugeleitet. Es verbrennt wie alle zugeführten Proben und erzeugt hierbei die charakteristischen Spektrallinien. Auch die hierbei erhaltenen Signale (Meßwerte) werden dem Analysenrechner zugeleitet und mit dem Basissignal verglichen. Das zu prüfende, den Analyten enthaltende flüssige Medium (II) kann hierbei als solches oder in Verdünnung mit zugesetztem Lösungsmittel (I) dem Flammenphotometer als Detektor zugeleitet werden. Zur Frage, ob mit zugesetztem Lösungsmittel (I) gearbeitet werden soll, wird der Fachmann Umstände der praktischen Handhabung und der sicheren Bestimmung des Analyten heranziehen. So ist es angezeigt, ein viskoses zu prüfendes Medium (II) soweit zu verdünnen, daß es störungsfrei durch alle Leitungen des integrierten Analysengerätes befördert werden kann, dadurch die Konstanz des abgegebenen Signals (Meßwert) schnell und sicher erreicht wird und keine Rückvermischung mit den anderen Schritten im kontinuierlichen Analysenrhythmus erfolgt. Eine solche Verdünnung ist weiterhin dann angezeigt, wenn, wie im Falle der Erkennung des Na-/K-Gehaltes, im Flammenphotometer innerhalb des linearen Bereiches des Lambert/Beerschen Gesetzes gearbeitet werden soll, um Analysenfehler zu vermeiden. Der Umfang einer solchen etwa notwendigwerdenden Verdünnung ist dem Fachmann geläufig und kann durch einfache Vorversuche bestimmt werden. Die Verwendung einer mehrkanaligen Dosierpumpe erlaubt in jedem Falle die notwendige Einstellung eines konstanten Mischungsverhältnisses von (II) zu (I). Im folgenden Schritt c) wird schließlich im Sinne des angewandten Additionsverfahrens ein Gemisch des zu prüfenden Mediums (II) mit einer mit (II) beliebig homogen mischbaren Kalibrierlösung (III) in einem vorbestimmten Mischungsverhältnis dem Flammenphotometer zur Feststellung des additiven Analyt-Signals zugeführt. Auch für diesen Schritt kann zur Berücksichtigung der bereits genannten Gründe Lösungsmittel (I) zugemischt werden. Auch im Schritt c) sind die Mischungsverhältnisse im kontinuierlich wiederkehrenden Rhythmus konstant. Die einzustellenden, konstant zu haltenden Mischungsverhältnisse sind grundsätzlich unkritisch und werden dem vorliegenden Problem angepaßt, beispielsweise der Viskosität von (II) bzw. der Einhaltung der Linearität des der Detektion zugrundeliegenden physikalischen Gesetzes. Zur zweifelsfreien Erkennung und Vergleichbarkeit des Analyt-Signals mit dem additven Analyt-Signal werden (II) und (III) so miteinander gemischt, daß die Analyt-Signale in (II) und in (III) im Verhältnis gleicher Größenordnung zueinander liegen. Wenn also die vorbestimmte Analyt-Konzentration in (III) nahezu gleich der ist, die in (II) erwartet wird, werden (II) und (III) beispielsweise im Verhältnis gleicher Massen oder gleicher Volumina gemischt; ein allgemeines Mischungsverhältnis ist beispielsweise 3:1 bis 1:3. Die Zumischung von (I) im Schritt b) bzw. im Schritt c) ist gleichfalls unkritisch und liegt, falls überhaupt eine Zumischung erforderlich ist, im Bereich von 0,5 bis 10 Volumteilen (I) zu einem Volumteil (II) bzw. zu ein Volumteil (II)/(III)-Gemisch.

Selbstverständlich ist es möglich, die Feststellung des Analyt-Signals und die Feststellung des additiven Analyt-Signals umzukehren, also statt die Schritte in der Reihenfolge a), b) und c) in der Reihenfolge a), c) und b) auszuführen.

Ein etwa erforderlicher Verdünnungsschritt in den Schritten b) und c) erfolgt in jedem Falle automatisch.

Das vom Analyten freie und kein Signal gebende Lösungsmittel (I) ist in jedem Falle beliebig und homogen mit (II) mischbar. Gleiches gilt im Bezug auf die Kalibrierlösung (III) bezüglich (I) und (II). Für den Fall der Bestimmung von Na und K in einem Kohlenwasserstoffgemisch, beispielsweise Krackmittelöl, handelt es sich daher beim Lösungsmittel (I) um einen Kohlenwasserstoffstrom, der bevorzugt einen niedrigeren Siedepunkt als (II) hat. Damit wird in bevorzugter Weise garantiert, daß eine etwa erforderliche Absenkung der Viskosität erreicht wird, da niedriger siedende Komponenten im allgemeinen auch die niedrigere Viskosität aufweisen, und daß ein niedriger siedendes Lösungs- und Verdünnungsmittel im allgemeinen destillativ als Kopfprodukt oder im Seitenabzug erhalten wird und damit, anders als ein Sumpfprodukt, keine Belastung an zu detektierendem Na bzw. K hat.

Als Kalibrierlösung (III) wird mit Vorteil die Lösung von Na- bzw. K-Verbindungen, beispielsweise eines organischen Na-Salzes und eines organischen K-Salzes, in einem Kohlenwasserstoffstrom eingesetzt, wobei mit oder ohne Mitverwendung eines Lösungsvermittlers gearbeitet werden kann. Der Kohlenwasserstoffstrom, in welchem die genannten organischen Na-/K-Verbindungen gelöst werden, kann beispielsweise identisch sein mit dem Lösungsmittel (I). Für den Fall, daß die organischen Salze Salze längerkettiger aliphatischer Carbonsäuren sind, bieten sich solche längerkettigen aliphatischen Carbonsäuren in freier, d.h. nicht salzartiger Form als Lösungsvermittler an. Carbonsäuren, die hierfür in Frage kommen, sind beispielsweise C₄-C₁₂-Carbonsäuren. Die Menge an Na- bzw. K-Ionen in der zu detektierenden Flüssigkeit ist sowohl für Na als auch für K jeweils mit bis zu etwa 2 mg/l Flüssigkeit im Linearitätsbereich des Lambert/Beerschen Gesetzes gegeben. Zur Detektion des Analyt-Signals und des additiven Analyt-Signals wird man daher vorteilhafterweise eine solche Verdünnung sowohl von (II) als auch von (II)/(III)-Gemisch derart vornehmen, daß man mit Sicherheit unterhalb der genannten Obergrenze für die Linearität bleibt. Unter Berücksichtigung möglicher Verdünnungen kann sodann die Kalibrierlösung (III) auch eine höhere Konzentration, beispielsweise bis zu je 10 mg Na und K pro Liter enthalten. Um jedoch unnötige Verdünnungsschritte zu vermeiden, wird die Kalibrierlösung (III) im Bereich von 0,3 bis 2 mg/l an Na- und K-Ionen hergestellt.

Anstelle eines Flammenphotometers kann auch ein Atomabsorptionsspektrometer als Detektor für Metallionen, bevorzugt Alkalimetallionen, eingesetzt werden.

Der Analysenrechner (Computer) kann, wie bereits erwähnt, zur Steuerung einer automatischen Abfüllung des Kohlenwasserstoffgemisches in Kessel- oder Tankwagen mit Grenzwerten ausgerüstet werden, bei deren Überschreitung ein Alarm ausgelöst wird.

Das erfindungsgemäße Verfahren erlaubt ferner eine Überprüfung der Beständigkeit der Kalibrierlösung (III) und eine Überprüfung der Richtigkeit der Analyse, indem in vorbestimmten Abständen der genannte Rhythmus der Schritte a), b) und c) oder a), c) und b) durch einen Kontrollschritt d) unterbrochen wird. In diesem Kontrollschritt d) wird dem Detektor eine von (I), (II) und (III) unabhängige Flüssigkeit mit einem Gehalt an dem (den) zu detektierenden Analyten als Prüflösung (IV) zugeführt, die das gesamte System des erfindungsgemäßen Verfahrens zu überprüfen gestattet. Zum System des erfindungsgemäßen Verfahrens gehören neben (I), (II) und (III) auch der Detektor, im vorliegenden Beispiel das Flammenphotometer oder das Atomabsorptionsspektrometer, die beispielsweise durch Brennerverschmutzung oder durch sonstige externe Kontamination andere als die vorgesehenen Signale (Meßwerte) liefern. So hat sich beispielsweise herausgestellt, daß im gegebenen Beispiel eine der Komponenten des Systems des erfindungsgemäßen Verfahrens, nämlich die Kalibrierlösung (III) trotz der obengenannten geringen Konzentrationen an organischen Na- und K-Salzen nicht beliebig haltbar und beständig ist, was wiederum trotz der geringen Konzentrationen der Salze an dem dennoch wirksamen Polaritätsunterschied zwischen den Salzen einerseits und dem Kohlenwasserstoffgemisch andererseits liegt. Eine einzusetzende Prüflösung (IV) braucht nun mit dem zu messenden Medium (II), der einzusetzenden Kalibrierlösung (III) und dem verwendeten Lösungsmittel (I) nicht kompatibel, beispielsweise nicht mischbar zu sein; die Hauptforderung an die Prüflösung (IV) ist ihre physikalische und chemische Beständigkeit. So hat sich im vorliegenden Beispiel eine wäßrige NaCl/KCl-Lösung als hervorragend geeignet erwiesen, deren Konzentration an Na und K im Bereich von 0,5 bis 2 mg/l Flüssigkeit liegen soll. Selbstverständlich sind auch andere Na- und K-Salze, beispielsweise Sulfate oder Nitrate für diesen Zweck geeignet. Die Prüflösung (IV) wird in unabhängigen Analysenverfahren auf ihren tatsächlichen Gehalt untersucht.

Die Ersteinstellung und Überprüfung auf Richtigkeit des dem erfindungsgemäßen Verfahren zugrundeliegenden Systems geschieht in folgender Weise:
1. Zunächst wird die Basislinie mit Hilfe des Lösungsmittels (I) festgelegt, indem es dem Detektor zugeführt wird. Für den Fall einer Überprüfung der Basislinie (Kontaminationsprüfung) wird ebenfalls Lösungsmittel (I) dem Detektor zugeführt. Ergibt sich bei dieser Überprüfung der alte Wert der Basislinie, kann mit dem kontinuierlichen Analysenrhythmus fortgefahren werden. Ergibt sich ein neuer Wert, wird der gesamte Analysenapparat (mehrkanalige Dosierpumpe, Mischstrecke und Detektor) gespült; ergibt sich ein konstanter Wert, kann bei Bedarf eine Neueinstellung gemäß den weiter unten folgenden Schritten erfolgen; ergibt sich kein konstanter Wert, wird ein Alarm ausgelöst, und es muß eine weitere Fehlersuche vorgenommen werden.
2. Um die Signale des zu messenden, den Analyten enthaltenden Mediums (II) mit den Signalen der Prüflösung (IV) vergleichen zu können, muß eine Bezugsfunktion aufgenommen werden; dies geschieht mit unterschiedlichen Verdünnungen der Kalibrierlösung (III) mit Lösungsmittel (I).
3. In diese aufgenommene Bezugsfunktion wird der gemessene Na- und K-Gehalt der Prüflösung (IV) hineingelesen, was den Bezugswert liefert.
4. Zur Überprüfung der Kalibrierlösung (III) (Chemostabilitätsprüfung) wird die Messung einer gewünschten Verdünnung von Kalibrierlösung (III) mit Lösungsmittel (I) anhand der Bezugsfunktion durchgeführt. Ergibt sich der alte Wert, kann mit dem kontinuierlichen Analysenrhythmus fortgefahren werden. Ergibt sich ein neuer Wert, wird eine Neuberechnung der Na-/K-Kalibrierlösung (III) anhand einer neuen Bezugsfunktion und eines neuen Bezugswertes erforderlich.
5. Zu einer Analysengerätesystemprüfung wird die Prüflösung (IV) gemessen und mit der vorliegenden Bezugsfunktion verglichen. Ergibt sich hierbei der alte Wert, kann im kontinuierlichen Analysenrhythmus fortgefahren werden. Ergibt sich ein neuer Wert muß die Bezugsfunktion neu erstellt werden.

Weitere Einsatzmöglichkeiten des erfindungsgemäßen Verfahrens sind das Erkennen weiterer einzelner Metalle/Elemente oder Gemische mehrerer von ihnen in einzelnen flüssigen Medien organischer oder anorganischer Art, das Erkennen von unerwünschten Nebenprodukten, beispielsweise Brenzprodukten nach thermischer Belastung, und weitere analytische Problemlösungen, die dem Fachmann bekannt sind. Hierzu werden unter anderem beispielsweise die oben genannten Detektoren eingesetzt. Die Analyten werden entweder direkt oder ihre Umwandlungsprodukte aus einer charakteristischen, schnell verlaufenden Reaktion detektiert. Lösungs-/Verdünnungsmittel (I), Kalibrierlösungen (III) und Prüflösungen (IV) werden in fachmännisch geläufiger Art dem jeweiligen Problem angepaßt.

Weitere Beispiele für den Einsatz des erfindungsgemäßen Verfahrens sind etwa:
- Überprüfung von Eluaten auf eine Reihe von Schwermetallen aus Ionenaustauscherharzen für den Lebensmittelbereich. Hierbei sind eine automatische Anreicherung und die automatische Kalibrierung gegeben, der Detektor ist z.B. ein optisches Emissionsspektrometer.
- Überprüfung von identifizierten Organika in Abwässern mit oder ohne automatische Anreicherung mit für Spezies entsprechendem Detektor (z.B. UV-Detektion u.a.).

### Beispiel

Bei einem Kohlenwasserstoffgemisch des Siedebereichs 100-250°C mit C-Atomzahlen von 8 bis 10 ergaben sich bei konventioneller Bestimmung des Na- und K-Gehalts stark streuende Werte, so bei Extraktion mit Salzsäure und folgender flammenphotometrischer Bestimmung Na-Werte von 2 bis 7 mg/kg und K-Werte von unterhalb der Nachweisbarkeitsgrenze bis zu 2 mg/kg; beim Naßaufschluß des Kohlenwasserstoffgemisches mit H₂SO₄/HNO₃ und anschließender flammenphotometrischer Bestimmung ergaben sich Werte von 2 bis 8 mg/kg Na und weniger als 1 bis 5 mg/kg an K. Diese Werte erwiesen sich beim Vergleich mit dem erfindungsgemäßen Verfahren als zu hoch und zu stark schwankend. Bei Anwendung des erfindungsgemäßen Verfahrens und Einstellung von 0,5 mg/kg Na im Kohlenwasserstoffgemisch mit Hilfe eines weiteren Kohlenwasserstoffgemisches des Siedebereichs 100-250°C mit C-Atomzahlen von 8 bis 10 als Lösungs-/Verdünnungsmittel (I) und Addition von 0,5 mg/kg Na in der Kalibrierlösung (III) wurde das additive Analyt-Signal von 1,0 mg/kg Na wiedergefunden, was einer Wiederfindung von 100 % entspricht. Im Vergleich wurde bei einer geeichten Prüflösung (IV) ein Wert von 0,5 mg/kg mit gleichfalls 0,5 mg/kg wiedergefunden und ein Wert von 1,0 mg/kg ebenfalls mit einem Wert von 1,0 mg/kg wiedergefunden; beides entspricht einer Wiederfindung von 100 %.

Bei einem im Kohlenwasserstoffgemisch mit Hilfe von Lösungs-/Verdünnungsmittel (I) eingestellten Gehalt von 1,0 mg/kg K und einem Zusatz von 0,5 mg/kg K in Form der Kalibrierlösung (III) wurde eine Menge von 1,5 mg/kg K wiedergefunden (100 % Wiederfindung). Im Vergleich hierzu wurden geeichte Prüflösungen (IV) mit Gehalten von 0,5 mg/kg bzw. 1,0 mg/kg mit den Werten von gleichfalls 0,5 mg/kg bzw. 1,0 mg/kg wiedergefunden (Wiederfindung 100 %).

Weitere Ausführungsbeispiele sind:

Die Bestimmung von mehreren Elementen, wie z.B. Chrom, Blei, Zink, Kupfer, Nickel, Mangan, in gefilterten Abwässern, Trinkwasser, Prozesswasser und anschließender Bestimmung über die Optische Emissionsspektrometrie mit induktiv gekoppeltem Plasma (ICP-OES), die Bestimmung von Quecksilber in Erdgaskondensat mit Kaltdampf-Atomabsorptionsspektrometrie (CVAAS) als Detektionsverfahren.

## Patentansprüche

1. Verfahren zur Online-Analyse von in einem zu prüfenden flüssigen Medium vorliegenden Analyten nach dem Additionsverfahren für die Kalibrierung, dadurch gekennzeichnet, daß man in einem kontinuierlich wiederkehrenden und automatisierbaren Rhythmus einem Detektor schrittweise folgende flüssigen Stoffe zur Feststellung eines für den Analyten charakteristischen Signals zuführt:
a) ein vom Analyten freies und kein Signal gebendes Lösungsmittel (I) zur Feststellung der Signal-Basislinie;
b) das den Analyten enthaltende Medium (II) mit oder ohne in konstantem Mischungsverhältnis zugesetztes Lösungsmittel (I) zur Feststellung des Analyt-Signals; und
c) ein homogenes Gemisch von (II) mit einer mit (II) beliebig homogen mischbaren Kalibrierlösung (III) in einem konstanten Mischungsverhältnis (II):(III) zur Feststellung des additiven Analyt-Signals;
oder die Schritte b) und c) in umgekehrter Reihenfolge ausführt und die festgestellten Signale als Meßdaten auswertet, wobei zur Überprüfung einer ausreichenden chemischen und physikalischen Beständigkeit von (III) und der Richtigkeit der Analyse der genannte Rhythmus durch
d) Feststellung des Signals einer Prüflösung (IV) zur Überprüfung der Richtigkeit des Systems
unterbrochen und dann wie vorher fortgesetzt wird.

2. Verfahren nach Anspruch 1, dadurch gekennzeichnet, daß das den Analyten enthaltende Medium (II) im kontinuierlichen Rhythmus einer Transportleitung im Anschluß an seine Herstellung entnommen wird.

3. Verfahren nach Anspruch 1, dadurch gekennzeichnet, daß zur Zuführung der flüssigen Stoffe zum Detektor eine mehrkanalige Dosierpumpe mit einstellbarem Mischungsverhältnis und nachgeschalteter Mischstrecke eingesetztwird.

4. Verfahren nach Anspruch 1, dadurch gekennzeichnet, daß der im zu prüfenden flüssigen Medium (II) vorliegende Analyt ein Gemisch aus Na- und K-Verbindungen in einem Kohlenwasserstoffgemisch ist.

5. Verfahren nach Anspruch 4, dadurch gekennzeichnet, daß das Lösungsmittel (I) ein vom Analyten freier Kohlenwasserstoffstrom ist, der bevorzugt einen niedrigeren Siedebereich als (II) hat.

6. Verfahren nach Anspruch 4, dadurch gekennzeichnet, daß die Kalibrierlösung (III) die Lösung eines organischen Na-Salzes und eines organischen K-Salzes in einem Kohlenwasserstoffstrom mit oder ohne Mitverwendung eines Lösungsvermittlers ist.

7. Verfahren nach Anspruch 4, dadurch gekennzeichnet, daß der Detektor ein Flammenphotometer oder ein Atomabsorptionsspektrometer ist.
